# EUROPÄISCHE PATENTSCHRIFT

(11) **EP 3 727 960 B1**
(45) Veröffentlichungstag und Bekanntmachung des Hinweises auf die Patenterteilung: **06.10.2021**
(21) Anmeldenummer: 19831699.4
(22) Anmeldetag: 19.12.2019
(51) Int. Cl.: B60S 3/00, A47L 9/00, A47L 9/02

(54) **SAUGREINIGUNGSVORSATZ**
SUCTION CLEANING ATTACHMENT
ACCESSOIRE DE NETTOYAGE PAR ASPIRATION

(30) Priorität: 13.03.2019 DE 102019001722
(43) Veröffentlichungstag der Anmeldung: 28.10.2020
(73) Patentinhaber: Mr. Wash Autoservice AG, 45143 Essen (DE)
(72) Erfinder: ENNING, Richard, 45470 Mülheim (DE); VAN DE POL, Cornelis, 58119 Haagen (DE)
(74) Vertreter: Weidener, Jörg Michael
(86) Internationale Anmeldenummer: PCT/EP2019/086278
(87) Internationale Veröffentlichungsnummer: WO 2020/182332

(56) Entgegenhaltungen:
- DE-A1-102004 025 390
- US-A1- 2003 196 292

## Beschreibung

Die vorliegende Erfindung betrifft einen Saugreinigungsvorsatz einer Reinigungsvorrichtung zur Verwendung zur Innenreinigung von Kraftfahrzeugen mittels einer Saugluftströmung. Der Saugreinigungsvorsatz ist zum Einsetzen und zur Halterung in einen Köcher im Nicht-Gebrauchszustand vorgesehen. Letztlich kann der Saugreinigungsvorsatz aus dem Köcher zur Innenreinigung von Kraftfahrzeugen entnommen werden.

Der Nicht-Gebrauchszustand ist demgemäß vor und nach der Innenreinigung der Kraftfahrzeuge vorgesehen. Der Saugreinigungsvorsatz dient zum Absaugen von Schmutzpartikeln im Innenraum von Kraftfahrzeugen mittels einer Saugluftströmung.

Der Saugreinigungsvorsatz weist einen innenliegenden Saugkanal zum Führen der Saugluftströmung auf. Ferner ist ein Gehäuse und ein an der Außenseite des Gehäuses vorgesehener Griffbereich vorgesehen. Der Saugkanal mündet an seinem äußeren Ende in eine Saugöffnung.

Als Griffbereich kann letztlich derjenige Bereich des Saugreinigungsvorsatzes verstanden werden, der im in den Köcher eingesetzten Zustand über den äußeren Rand des Köchers übersteht. An diesem Griffbereich greift der Benutzer an und/oder umgreift diesen, um den Saugreinigungsvorsatz aus dem Köcher zu entfernen und den Saugreinigungsvorsatz anschließend zur Innenreinigung zu nutzen.

Im Stand der Technik ist bei Reinigungsvorrichtungen, denen in der Regel eine Mehrzahl von Saugreinigungsvorsätzen zugeordnet sind, letztlich ein Dauerbetrieb bzw. eine kontinuierliche Zurverfügungstellung der Saugluftströmung für alle zugeordneten Saugreinigungsvorsätze vorgesehen, so dass sowohl im Gebrauchszustand als auch im Nicht-Gebrauchszustand der Unterdruck der Saugluftströmung gehalten wird.

Nachteilig an dem bisher bekannten System ist jedoch, dass der Saugreinigungsvorsatz vergleichsweise schwer und nur mit einem hohen Kraftaufwand aus dem Köcher entfernbar ist. Dies kann, wenn der Nutzer mit Gewalt an dem Saugreinigungsvorsatz oder dem zugeordneten Saugschlauch zieht, zu Beschädigungen führen.

Darüber hinaus ist im Stand der Technik letztlich ein hoher Energiebedarf zur Bereitstellung der kontinuierlichen Saugluftströmung erforderlich. Die elektrische Energie wird zur Aufrechterhaltung des benötigten Unterdruckes der Saugluftströmung für die gesamte Anlage benötigt.

Die DE 10 2004 025 390 A1 betrifft ein Saugdüsen-Haltesystem mit einer Saugleitung, mindestens einer mit der Saugleitung mechanisch lösbar verbindbaren Saugdüse und einer mit der Saugdüsenhalterung, an der die Saugdüse lösbar befestigbar ist.

Die US 2003/196292 A1 betrifft eine Reinigungsvorrichtung, die einen Saugschlauch umfasst, wobei an dem Saugschlauch ein Reinigungsvorsatz angeordnet ist.

Aufgabe der vorliegenden Erfindung ist es nun, die vorgenannten Nachteile des Standes der Technik zu vermeiden oder aber zumindest im Wesentlichen zu reduzieren.

Bei einem Saugreinigungsvorsatz der vorgenannten Art ist zur Lösung der vorgenannten Aufgabe erfindungsgemäß außenseitig am Gehäuse zwischen der Saugöffnung und dem Griffbereich ein über den Griffbereich überstehender Anschlag zum Zusammenwirken mit dem äußeren Rand bzw. der Randkante des Köchers vorgesehen.

Bevorzugt schließt der, insbesondere umlaufende, Anschlag zumindest im Wesentlichen bündig mit dem äußeren Rand des Köchers ab. Vorzugsweise steht der Anschlag im im Köcher eingesetzten Zustand des Saugreinigungsvorsatzes über den äußeren Rand des Köchers über.

Als äußerer Rand des Köchers wird erfindungsgemäß im Folgenden auch der äußere Randbereich des Köchers - sowohl innen- als auch außenseitig - oder die äußere Randkante verstanden. Insbesondere kann der Anschlag des Saugreinigungsvorsatzes zumindest bereichsweise innerhalb des äußeren Randbereiches des Köchers im Nicht-Gebrauchszustand angeordnet sein.

Zum Beispiel kann der Köcher einen im äußeren Randbereich angeordneten inneren Anschlag zum, vorzugsweise bündigen, Abschluss mit dem Anschlag des Saugreinigungsvorsatzes aufweisen. Demzufolge kann der Anschlag des Saugreinigungsvorsatzes zumindest bereichsweise von dem äußeren Rand des Köchers im Nicht-Gebrauchszustand umgeben sein. Im Folgenden wird die vorgenannte Anordnung des Anschlags des Saugreinigungsvorsatzes innerhalb des äußeren Randbereichs auch als "bündiger Abschluss" zwischen dem Köcher und dem Anschlag des Saugreinigungsvorsatzes verstanden.

Der Köcher bildet eine Aufnahme für den Saugreinigungsvorsatz, wobei er eine Mantelfläche und eine end- bzw. stirnseitig geschlossene Unterseite aufweist. Die Köcheröffnung, in die der Saugreinigungsvorsatz hineingeführt werden kann, ist letztlich offen bzw. freiliegend ausgebildet und für den Nutzer ohne weiteres zugänglich. Insbesondere kann der Köcher eine hohlzylindrische Form aufweisen. Letztlich ist der Köcher an seiner Mantelfläche und an seiner geschlossenen Unterseite zumindest im Wesentlichen dicht ausgebildet, insbesondere wobei der Köcher keine weiteren Öffnungen neben der Köcheröffnung aufweist.

Erfindungsgemäß ermöglicht der Anschlag, dass ein zumindest im Wesentlichen druckdichter Abschluss zwischen dem Köcher und dem Saugreinigungsvorsatz im Nicht-Gebrauchszustand sichergestellt werden kann. Hierdurch wird eine Vielzahl von erfindungsgemäßen Vorteilen erreicht.

Durch den Anschlag wird auch eine Begrenzung der Einsteckbewegung des Saugreinigungsvorsatzes in den Köcher bereitgestellt. Ein Einführen in den Köcher über den Anschlag hinaus ist insbesondere nicht vorgesehen oder überhaupt möglich.

Außerdem wird die Handhabung des Saugreinigungsvorsatzes erleichtert, wobei der Saugreinigungsvorsatz im Griffbereich von einer Hand eines Benutzers umfasst und somit eine erleichterte Bedienung gewährleistet werden kann. In jedem Falle ist ein vorgegebener, vorzugsweise eindeutig erkennbarer, Griffbereich vorgesehen, der im Nicht-Gebrauchszustand und im eingesetzten Zustand im Köcher außerhalb des Köchers angeordnet ist. Insbesondere ist der Griffbereich außenseitig nicht begrenzt, so dass ein Umfassen des Griffbereichs aus verschiedenen Positionen für den Benutzer des Saugreinigungsvorsatzes ohne weiteres möglich ist. Letztlich kann der Griffbereich allseitig frei zugänglich sein. Dabei ist es im Übrigen so, dass der Griffbereich durch keinen Bügel oder dergleichen begrenzt und somit frei zugänglich ist, so dass eine Benutzung des Saugreinigungsvorsatzes oder ein Umfassen des Griffbereichs aus jeder Nutzersituation heraus möglich ist.

Durch den Anschlag und den sich dadurch ergebenden definierten Griffbereich wird im Übrigen gewährleistet, dass der Saugreinigungsvorsatz vergleichsweise einfach aus dem Köcher entfernt werden kann. Da sich der Saugreinigungsvorsatz aufgrund des Anschlags nicht in den Köcher hineinziehen kann, kann der Benutzer den definierten Griffbereich ohne weiteres umgreifen und den Saugreinigungsvorsatz problemlos aus dem Köcher "ziehen". Nach Lösen des druckdichten Abschlusses lässt sich der Saugreinigungsvorsatz einfach und ohne großen Kraftaufwand bedienfreundlich aus dem Köcher entfernen.

Des Weiteren ist beim Zustandekommen der Erfindung erkannt worden, dass durch den zumindest im Wesentlichen druckdichten Abschluss zwischen dem Köcher und dem Saugreinigungsvorsatz die für die Gebläseeinrichtung benötige Energie deutlich, vorzugsweise um bis zu 20%, gesenkt werden kann. Letztlich kann durch den zumindest im Wesentlichen druckdichten Abschluss zwischen dem äußeren Rand des Köchers und dem Anschlag ein Unterdruck im Nicht-Gebrauchszustand vergleichsweise einfach - d. h. mit einem geringen Energieaufwand - gehalten werden. Ein zumindest im Wesentlichen in sich geschlossenes, den Unterdruck der Saugluftströmung aufweisendes, System wird demzufolge im Nicht-Gebrauchszustand erfindungsgemäß ermöglicht.

Zum Zusammenwirken mit dem äußeren Rand des Köchers ist es insbesondere erforderlich, dass sich der Anschlag an den äußeren Rand des Köchers anordnet, so dass ein zumindest im Wesentlichen druckdichter Abschluss zwischen dem Köcher und dem Saugreinigungsvorsatz entsteht. In diesem Zusammenhang sind grundsätzlich zwei Ausführungsformen denkbar. Erstens kann der Anschlag als Stufe ausgebildet sein, wobei die Stufe zwischen dem Griffbereich, der im Nicht-Gebrauchszustand (d.h. eingesetzter Zustand des Saugreinigungsvorsatzes in den Köcher) außerhalb des Köchers angeordnet ist, und dem vorderen, in den Köcher eingesetzten Bereich des Saugreinigungsvorsatzes angeordnet ist. Alternativ oder zusätzlich ist erfindungsgemäß zweitens vorgesehen, dass der Anschlag über den Griffbereich übersteht und somit letztlich als Vorsprung ausgebildet sein kann.

Bei einer besonders bevorzugten Ausführungsform ist vorgesehen, dass der Anschlag als umlaufender, insbesondere ringförmiger, Vorsprung ausgebildet ist. Der Anschlag grenzt unmittelbar an das Gehäuse an und/oder bildet einen Teil des Gehäuses. Vorzugsweise ist der Anschlag korrespondierend zur Form des äußeren Randes des Köchers ausgebildet, so dass sich eine bündige Auflage ergibt.

Erfindungsgemäß weist der Saugreinigungsvorsatz einen Griffabschnitt auf, der zwei äußere Anschlussenden und einen zwischen den Anschlussenden vorgesehenen Griffabschnittsbereich aufweist. Der Griffabschnittsbereich kann insbesondere den zuvor genannten Griffbereich bilden.

Der Außendurchmesser wenigstens eines Anschlussendes ist zudem größer als der Außendurchmesser des Griffabschnittsbereichs ausgebildet. Somit kann gewährleistet werden, dass ein Verrutschen der Hand eines Benutzers nur innerhalb des Griffabschnittsbereichs möglich ist. Ferner ist für den Nutzer eindeutig erkennbar, welcher Teil des Saugreinigungsvorsatzes den Griffbereich bzw. den Griffabschnittsbereich bildet, der zum Greifen des Saugreinigungsvorsatzes durch den Nutzer vorgesehen ist.

Der Griffabschnittsbereich dient zur einfachen Handhabbarkeit des Saugreinigungsvorsatzes. Bei in der Praxis bekannten Staubsaugdüsen ist keine vertiefte Angriffsfläche für die Hände des Nutzers vorgesehen. Ergonomisch ist der mittige Griffabschnittsbereich am Griffabschnitt sehr vorteilhaft, da ein vorgegebener Bereich - entsprechend der Ergonomie des durchschnittlichen Anwenders ausgebildet - als Angriffsfläche vorhanden ist, was gerade bei einer längeren Benutzung entscheidend ist. Der Griffabschnittsbereich kann eine Länge von (250 ± 50) mm aufweisen, wobei der Außendurchmesser des Griffbereichs (45 ± 10) mm betragen kann.

Der Griffabschnittsbereich bildet letztlich einen definierten Bereich des Saugreinigungsvorsatzes, der eine verbesserte und vereinfachte Handhabung für den Nutzer ermöglicht.

Neben der technischen Funktionalität des Griffabschnitts ergibt die zuvor beschriebene Form des Griffabschnittsbereichs durch die vorbeschriebene Form des Griffabschnittsbereichs eine besondere ästhetische Gestaltung, die sich deutlich von bisher bekannten Saugreinigungsvorsätzen abhebt und letztlich durch ihre funktionale Ausstrahlung ansprechend für den Nutzer ist. Besonders bevorzugt ist, wenn der Griffabschnittsbereich auch eine Anzeichenfunktion, insbesondere haptische Mittel, wie eine Mehrzahl parallel verlaufender Rillen, aufweist. Die haptischen Mittel können dem Nutzer signalisieren, dass ein Anfassen des Saugreinigungsvorsatzes in diesem Bereich vorgesehen ist.

Durch den ergonomisch geformten Griffabschnittsbereich kann ein ermüdungsfreies Arbeiten ermöglicht werden. Dieses zeichnet sich letztlich dadurch aus, dass die zur Halterung des Saugreinigungsvorsatzes benötigte Griffkraft wesentlich länger als bei der im Stand der Technik bekannten Staubsaugdüse aufgebracht werden kann. Dabei versteht es sich, dass die Muskulatur in der Hand des Nutzers nicht überstrapaziert und demgemäß ein frühzeitiges Nachlassen der Griffkraft vermieden werden kann. Demzufolge lässt sich eine sichere Handhabung des erfindungsgemäßen Staubreinigungsvorsatzes in teilweise engen Fahrzeuginnenräumen gewährleisten.

Darüber hinaus kann der Anschlag an dem der Saugöffnung zugewandten Anschlussende angeordnet sein. Insbesondere steht der Anschlag außenseitig über der Oberfläche des Anschlussendes über. Das Anschlussende kann eine zumindest im Wesentlichen hohlzylindrische Form aufweisen.

Gemäß einer weiteren vorteilhaften Ausgestaltung des Erfindungsgedankens weist der Griffabschnittsbereich außenseitig eine Riffelung und/oder eine strukturierte Oberfläche auf. Eine derartige Oberfläche des Griffabschnittsbereichs erleichtert die Handhabung des Saugreinigungsvorsatzes sowie das Greifen des Saugreinigungsvorsatzes im Bereich des Griffabschnittsbereichs. Demgemäß kann zum einen eine erhöhte Grifffestigkeit ermöglicht und zum anderen eine optische Kennzeichnung der Grifffläche erzeugt werden. Die Rillen können einen Abstand von 5 ± 2 mm zueinander aufweisen.

Folglich wird auch die Haptik durch die Riffelung und/oder die strukturierte Oberfläche verbessert und dem Nutzer ferner ein weiteres Signalzeichen (haptisches Anzeichen) gegeben, welcher Bereich des Saugreinigungsvorsatzes den Griffbereich bildet. Aus formalästhetischen Gesichtspunkten ist besonders vorteilhaft, dass der Griffabschnittsbereich zumindest im Wesentlichen optisch der Formgebung des Saugschlauches entsprechen kann.

Ferner kann der Saugreinigungsvorsatz wenigstens dreiteilig ausgebildet sein. Eine mehrteilige Ausbildung des Saugreinigungsvorsatzes zeigt sich unter verschiedenen Aspekten als vorteilhaft. Erstens kann ein Austausch der einzelnen Teile, insbesondere bei Verschleiß, vergleichsweise einfach und kostengünstig erfolgen. Darüber hinaus kann zweitens der Saugreinigungsvorsatz vergleichsweise einfach derart umgerüstet werden, dass beispielsweise die Saugöffnung und/oder die äußere Form des Saugreinigungsvorsatzes individuell auf den Nutzer und/oder die jeweilige Reinigungsvorrichtung abgestimmt werden kann. Insbesondere wird durch die mehrteilige Ausbildung des Saugreinigungsvorsatzes ein einfacher Zugang, vorzugsweise bei Wartungs- und/oder Reparaturarbeiten, zum Saugkanal und/oder innenseitig zum Gehäuse ermöglicht.

Vorzugsweise weist das Gehäuse einen mit dem Griffabschnitt lösbar verbindbaren Gehäusestutzen auf. Das Gehäuse kann ferner ein mit dem Gehäusestutzen lösbar verbindbares Endstück umfassen. Alternativ oder zusätzlich kann vorgesehen sein, dass das Endstück lösbar mit dem Griffabschnitt verbunden ist. Die vorgenannten Komponenten können insbesondere ineinandergesteckt werden. Letztlich kann vorgesehen sein, dass der Gehäusestutzen mit dem Griffabschnitt und/oder das Endstück mit dem Gehäusestutzen und/oder dem Griffabschnitt formschlüssig, kraftschlüssig und/oder reibschlüssig verbunden ist. Ganz besonders bevorzugt ist eine reibschlüssige Verbindung, insbesondere in Form einer Steckverbindung, vorgesehen. Im Gebrauchszustand des Saugreinigungsvorsatzes sind die vorgenannten Teile - das heißt der Griffabschnitt, das Endstück und der Gehäusestutzen - fest miteinander verbunden. Auch beim Ausziehen des Saugreinigungsvorsatzes aus dem Köcher kann ein Lösen des Griffbereichs bzw. des Griffabschnitts von dem Gehäusestutzen vermieden werden. Werden jedoch beispielsweise der Griffabschnitt und der Gehäusestutzen gegeneinander verdreht, so kann die Verbindung gelöst werden - z. B. zum Austausch des Gehäusestutzens.

Ganz besonders bevorzugt ist der Griffabschnittsbereich und/oder der Griffabschnitt rotationssymmetrisch und/oder spiegelsymmetrisch zu einer Mittellängsachse ausgebildet. Die Symmetrie ergibt eine ergonomisch angepasste Handhabung des Saugreinigungsvorsatzes sowie insbesondere eine ästhetisch ansprechende Ausbildung des Griffabschnitts. Letztlich handelt es sich sowohl beim Griffabschnittsbereich als auch beim Griffabschnitt um einen hülsenförmigen Körper, der in einfacher Weise hergestellt werden kann.

Insbesondere ist der Griffabschnitt mit einem Anschlussbereich in den Gehäusestutzen einsteckbar. Der Gehäusestutzen weist letztlich eine zu dem Anschlussbereich korrespondierende Aufnahme auf. Insbesondere grenzt der Anschlussbereich des Griffabschnitts an die Innenwandung des Gehäusestutzen an. Alternativ oder zusätzlich kann vorgesehen sein, dass der Gehäusestutzen mit einem Anschlussbereich in das Endstück einsteckbar ist, wobei der Anschlussbereich des Endstücks innenseitig an die Innenwandung des Endstücks angrenzen und das Endstück einen zu dem Anschlussbereich des Gehäusestutzens korrespondierenden Aufnahmebereich aufweisen kann. Darüber hinaus ist es auch möglich, dass der Griffabschnitt in den Gehäusestutzen und/oder das Endstück in den Gehäusestutzen einsteckbar ist. Zu diesem Zweck sind die Anschlussbereiche an dem Endstück bzw. an dem Gehäusestutzen vorgesehen.

Vorteilhafterweise ist eine Verjüngung des Saugkanals in dem Gehäusestutzen vorgesehen, wobei die zumindest im Wesentlichen hohlzylindrische Form des Griffabschnitts in eine zumindest im Wesentlichen schlitzartige Form übergeht.

Darüber hinaus kann der Gehäusestutzen zumindest bereichsweise konisch zulaufende, insbesondere sich zur Saugöffnung hin verjüngende, Übergangsflächen aufweisen. Vorzugsweise weist der Gehäusestutzen und/oder das Endstück zwei Seitenhauptflächen auf, die gemeinsam mit einer oberen Seitenfläche und einer unteren Seitenfläche die Mantelfläche des Gehäusestutzens und/oder des Endstücks bilden. In diesem Zusammenhang kann vorgesehen sein, dass die Seitenhauptflächen im Vergleich zu der oberen Seitenfläche und/oder der unteren Seitenfläche eine um bis zu 1000%, vorzugsweise zwischen 300% bis 800%, größer ausgebildete Fläche als die obere und/oder untere Seitenfläche aufweisen. Folglich kann so eine zumindest im Wesentlichen langgestreckte bzw. schlitzartige Form der Saugöffnung und des Saugkanals erreicht werden. Durch die vorgenannte Form wird eine Handhabung bei der Innenreinigung von Kraftfahrzeugen erleichtert, da der Gehäusestutzen und/oder das Endstück zur Saugöffnung hin eine schlanke Form haben, um einen besseren Zugang zu engen und schlecht zugänglichen Bereichen im Innenraum eines Fahrzeugs zu ermöglichen.

Bei einer weiteren besonders bevorzugten Ausführungsform der vorliegenden Erfindung grenzt der Anschlag unmittelbar an den Gehäusestutzen an. Vorzugsweise kann der an den Gehäusestutzen angrenzende Anschlag über den Griffbereich, insbesondere über das Anschlussende, überstehen. Der Anschlag kann dabei an dem Anschlussende und angrenzend zum Anschlussbereich für den Gehäusestutzen angeordnet sein. Die Dicke bzw. die Höhe des Anschlages kann insbesondere größer als die Materialstärke des Gehäusestutzens ausgebildet sein, so dass auch nach Anordnung des Gehäusestutzens auf den Anschlussbereich des Anschlussendes des Griffabschnitts der Anschlag über den Gehäusestutzen und über das Anschlussende übersteht. Letztlich kann der Anschlag derart ausgebildet sein, dass er bündig mit dem äußeren Rand des Köchers im Nicht-Gebrauchszustand abschließt.

Alternativ oder zusätzlich kann vorgesehen sein, dass der, vorzugsweise als Stufe ausgebildete, Anschlag außenseitig an dem Gehäusestutzen angeordnet ist. Dabei kann der Anschlag außenseitig auf dem Gehäusestutzen und angrenzend an das Anschlussende angeordnet sein. Die durch den Anschlag gebildete Stufe kann derart ausgebildet sein, dass der Anschlag eine Begrenzung der Einschubbewegung des Saugreinigungsvorsatzes in den Köcher bilden kann.

Erfindungsgemäß kann die Betriebssicherheit durch das Zusammenwirken des Anschlags und des äußeren Rand des Köchers erhöht werden, da eine vorgegebene und definierte Anordnung des Saugreinigungsvorsatzes in den Köcher über den Anschlag ermöglicht wird.

Vorteilhafterweise weist das Endstück an dem die Saugöffnung bildenden Saugende eine Schräge auf. Die Schräge kann insbesondere längs der zumindest im Wesentlichen rechteckförmigen Ausbildung der Saugöffnung angeordnet sein. Die Schräge ermöglicht eine verbesserte Anordnung des Endstücks mit der Saugöffnung auf den zu reinigenden Oberflächen. Hierdurch kann die Bedienfreundlichkeit bei der Benutzung zur Innenreinigung von Kraftfahrzeugen erleichtert werden.

Bei der Innenreinigung von Kraftfahrzeugen müssen häufig schwer zu erreichende Bereiche des Innenraums der Saugluftströmung zur Absaugung von Schmutzpartikeln ausgesetzt werden. Durch das endseitig schräg ausgebildete Endstück kann eine verbesserte Kontaktierung bzw. Erreichbarkeit schwer zugänglicher Bereiche sichergestellt werden.

Insbesondere kann die endseitige Schräge unter einem Winkel von 45° ± 15° verlaufen, wodurch schwer zu erreichende Bereiche des Innenraums von Kraftfahrzeugen vom Benutzer, ohne Einnahme einer Zwangshaltung eines Nutzers, erreicht werden können.

Bei einer weiteren Ausgestaltung der Erfindung ist vorgesehen, dass das Endstück außenseitig eine, insbesondere parallel zur Schräge verlaufende, Markierung als Verschleißanzeige aufweist. Die Markierung kann entweder in das Endstück eingeprägt und/oder oberseitig durch eine farbliche Hervorhebung auf dem Endstück angeordnet sein. Die Verschleißanzeige ist letztlich dafür vorgesehen, dem Nutzer anzuzeigen, wann ein Austausch des Endstücks erforderlich ist, insbesondere um eine Beschädigung des Gehäusestutzens zu vermeiden. In diesem Zusammenhang ist es vorteilhaft, wenn die Markierung im verbundenen Zustand des Endstücks mit dem Gehäusestutzen hinter dem Gehäusestutzen, der Saugöffnung zugewandt, angeordnet ist. Bei Überschreiten der Markierung würde letztlich auch ein Verschleiß des Gehäusestutzens vorliegen, der vorzugsweise vermieden werden soll.

Insbesondere ist die Markierung bei dem in den Gehäusestutzen eingesteckten Endstück beabstandet zum der Saugöffnung zugewandten äußeren Rand des Gehäusestutzens angeordnet.

Demzufolge kann durch das austauschbare Endstück eine verlängerte Nutzungsdauer des Saugreinigungsvorsatzes erreicht werden, insbesondere wobei bei Verschleiß lediglich das Endstück ausgetauscht werden muss. Gerade im Zusammenhang mit einer guten ökologischen Komptabilität sowie einer ressourcenschonenden Verwendung des Saugreinigungsvorsatzes zeigt sich eine derartige mehrteilige Ausbildung des Saugreinigungsvorsatzes als vorteilhaft.

Letztlich kann das Endstück als "Verschleißstück" ausgebildet sein, das vergleichsweise einfach austauschbar ist. Das Endstück ist dabei von seinen Abmaßen und seiner Ausgestaltung derart dimensioniert, dass es in Innenräumen von Kraftfahrzeugen sowohl eine möglichst große Saugfläche in kürzester Zeit als auch schwer zugängliche Bereiche des Innenraums erreichen und von Schmutzpartikeln zumindest im Wesentlichen befreien kann.

Als Material für das Gehäuse, das Endstück, den Gehäusestutzen und/oder den Griffabschnitt ist vorzugsweise ein Kunststoff, insbesondere ein thermoplastischer Kunststoff, vorgesehen. Besonders bevorzugt ist als Material Polyethylen (PE), Polypropylen (PP), Polyvinylchlorid (PVC) und/oder Polystyrol (PS) vorgesehen. Die vorgenannten Komponenten des Saugreinigungsvorsatzes können insbesondere aus den vorgenannten Materialien bestehen. Vorzugsweise ist der gesamte Saugreinigungsvorsatz aus Kunststoff ausgebildet. Die vorgenannten Kunststoffe zeichnen sich insbesondere durch eine hohe Festigkeit aus.

Ferner liegt bevorzugt die Querschnittsfläche des Saugkanals zwischen 100 mm² bis 1000 mm², weiter bevorzugt zwischen 200 mm² bis 800 mm², weiter bevorzugt weiter zwischen 300 mm² bis 600 mm² und insbesondere zumindest im Wesentlichen zwischen 400 mm² bis 500 mm². Insbesondere ist vorgesehen, dass sich die Querschnittsfläche des Saugkanals entlang des Saugreinigungsvorsatzes in Richtung der Saugluftströmung wenigstens einmal, bevorzugt wenigstens zweimal, verjüngt. Insbesondere ist eine Verjüngung im Bereich des Griffabschnittsabschnittsbereich und/oder im Bereich des Endstücks und/oder des Gehäusestutzens vorgesehen. Durch die vorderseitige Verjüngung der Querschnittsfläche des Saugkanals kann insbesondere eine erhöhte Saugleistung an der endseitigen Saugöffnung erreicht werden.

Gemäß einer weiteren vorteilhaften Ausführungsform ist eine Leuchteinrichtung, vorzugsweise mittels wenigstens einer, vorzugsweise zwei, LED an dem Endstück, dem Gehäusestutzen, dem Griffabschnittsbereich und/oder dem Griffbereich, bevorzugt außenseitig, insbesondere dem Endstück zugewandt, vorgesehen. Die Leuchteinrichtung kann mit wenigstens einer Leitung zur Stromführung verbunden sein. Die Leitung kann vorzugsweise innenseitig am Gehäusestutzen und/oder innenseitig des Endstücks angeordnet und/oder gehalten sein. Vorzugsweise ist ein Stromanschluss, insbesondere ein vier-poliger Stecker, der mit der Leuchteinrichtung über die wenigstens eine Leitung verbunden ist, am Griffbereich angeordnet ist. Die Leuchteinrichtung kann innerhalb des Saugkanals und/oder außerhalb des Saugkanals am Gehäusestutzen, am Griffabschnitt und/oder am Endstück montiert sein. Letztlich wird durch die Leuchteinrichtung, insbesondere wenn der Lichtkegel der Saugöffnung zugewandt ist, sichergestellt, dass der zu reinigende Bereich ausgeleuchtet wird.

Zur Vermeidung der Verschmutzung der LED, zur Erhaltung der Leuchtkraft der LED und/oder Minimierung der mechanischen Belastung kann eine Schutzeinrichtung, insbesondere eine LED-Abdeckung, mit der Leuchteinrichtung verbunden werden. Die LED-Abdeckung und/oder die Schutzeinrichtung kann turnusmäßig ausgetauscht werden. Die Schutzeinrichtung kann ferner mit dem Gehäusestutzen, dem Endstück, dem Griffabschnitt und/oder dem Saugkanal verbindbar, insbesondere verrastbar, sein.

Darüber hinaus kann auch eine Mehrzahl von Leuchtmitteln, insbesondere LEDs, innerhalb oder am Gehäuse vorgesehen sein. Sofern die Leuchtmittel und/oder die Leuchteinrichtung innerhalb des Gehäuses angeordnet sind, können der Gehäusestutzen, das Endstück und/oder der Griffabschnitt abschnittsweise transparent und/oder transluzent ausgebildet sein.

Vorzugsweise kann die Leuchteinrichtung ziel- und zweckgerichtet die abzusaugende und/oder zu reinigende Fläche im Fahrzeuginnenraum beleuchten. Vorteilhafterweise strahlt die Leuchteinrichtung über das Endstück und/oder den Gehäusestutzen hinweg und ist am Gehäusestutzen und/oder am Griffabschnitt befestigt. Die Leuchteinrichtung kann insbesondere schlecht ausgeleuchtete Bereiche, beispielsweise zwischen den Fahrzeugsitzen, im Fahrzeuginnenraum beleuchten.

Bevorzugt ist am Endstück und/oder am Gehäusestutzen ein zur Aufnahme der Leuchteinrichtung ausgebildeter Kanal vorgesehen. Vorzugsweise ist der Kanal und/oder die Leuchteinrichtung im Gehäusestutzen integriert bzw. in dem Gehäusestutzen angeordnet. Dieser Kanal ist gegenüber der Saugöffnung zurückgesetzt. Damit ist das Ende des Kanals von der Saugöffnung beabstandet. Auf diese Weise ergibt sich eine gute Ausleuchtung des zu reinigenden Bereichs, auch wenn das Endstück mit der Saugöffnung auf die zu reinigende Fläche aufgesetzt wird. Auch im Übrigen ist eine gute Ausleuchtung des zu reinigenden Bereichs durch die Rücksetzung des Kanals in Bezug auf die Saugöffnung gegeben, da der von der Leuchteinrichtung erzeugte Lichtkegel bzw. Lichtstrahl sich hinreichend weit ausbreiten und entsprechend strahlen kann.

Bedarfsweise kann die Leuchteinrichtung bzw. LED-Beleuchtung über einen weiteren Schalter, der bevorzugt im Bereich des Griffbereichs angeordnet ist, gesteuert werden. Die Leuchteinrichtung steigert zudem die Reinigungseffizienz, da sie beispielsweise in Nischen, Zwischenräumen und/oder am Fahrzeugboden den Schmutz und/oder die Partikel, die durch den Saugreinigungsvorsatz entfernbar sind, sichtbar macht, so dass ein Absaugen dieser Schmutzpartikel zielgerichtet durchgeführt werden kann.

Des Weiteren betrifft die vorliegende Erfindung eine Reinigungsvorrichtung zur Verwendung zur Innenreinigung von Kraftfahrzeugen. Die Reinigungsvorrichtung weist einen Saugreinigungsvorsatz nach wenigstens einer der zuvor beschriebenen Ausführungsformen auf. Ferner umfasst die Reinigungsvorrichtung wenigstens einen Köcher zur Halterung des Saugreinigungsvorsatzes im Nicht-Gebrauchszustand - das heißt vor und nach der Innenreinigung von Kraftfahrzeugen. Eine Gebläseeinrichtung ist zur Erzeugung eines Unterdrucks vorgesehen, wobei die Gebläseeinrichtung über einen Schlauch (Saugschlauch) dem Saugkanal zugeordnet ist. Die Gebläseeinrichtung stellt letztlich die zur Innenreinigung von Kraftfahrzeugen benötigte Saugluftströmung, die längs des Saugkanals geführt ist, bereit.

In diesem Zusammenhang versteht es sich, dass alle zuvor genannten bevorzugten Ausführungsbeispiele und die erfindungsgemäßen Vorteile in gleicher Weise auch für die erfindungsgemäße Reinigungsvorrichtung gelten. Zur Vermeidung von unnötigen Wiederholungen sei auf diesbezügliche Ausführungen verzichtet und ausdrücklich auf die vorangegangenen Erläuterungen verwiesen.

Der Köcher kann insbesondere hohlzylinderförmig ausgebildet sein. Der Köcher ist erfindungsgemäß ferner endseitig geschlossen, wobei der Anschlag des Saugreinigungsvorsatzes derart mit dem äußeren Rand des Köchers zusammenwirkt, dass sich ein zumindest im Wesentlichen druckdichter Abschluss ergibt.

Durch den druckdichten Abschluss zwischen dem äußeren Rand des Köchers und dem Anschlag des Saugreinigungsvorsatzes wird ein zumindest im Wesentlichen in sich geschlossenes, vorzugsweise druckdichtes, System zwischen dem Saugreinigungsvorsatz und der Gebläseeinrichtung sichergestellt, wodurch der elektrische Energieverbrauch der Anlage verringert werden kann. Letztlich kann dem Saugreinigungsvorsatz wenigstens ein Drucksensor zugeordnet sein, der den vorhandenen Unterdruck misst und somit im Gebrauchszustand die über eine Energiezuführeinrichtung zugeführte elektrische Energie erhöht. Im Nicht-Gebrauchszustand wird insbesondere die benötige elektrische Energie für die Saugluftströmung des Saugreinigungsvorsatzes reduziert.

Im eingesetzten Zustand des Saugreinigungsvorsatzes grenzt der Anschlag unmittelbar an den Köcher an. Insbesondere steht der Anschlag über den äußeren Rand des Köchers über. Letztlich bildet darüber hinaus auch der Anschlag eine Begrenzung der Einschubbewegung des Saugreinigungsvorsatzes in den Köcher. Dabei kann der Anschlag umlaufend um das Gehäuse korrespondierend zum äußeren Rand des Köchers ausgebildet sein, so dass ein zumindest im Wesentlichen druckdichter Abschluss bei Vermeidung einer reibschlüssigen Klemmung zwischen dem Saugreinigungsvorsatz und dem Köcher ermöglicht wird.

Alternativ oder zusätzlich kann der Köcher im äußeren Randbereich einen inneren Anschlag zum bündigen Abschluss mit dem Anschlag des Saugreinigungsvorsatzes aufweisen, insbesondere wobei der Anschlag des Saugreinigungsvorsatzes zumindest bereichsweise von dem äußeren Rand des Köchers umgeben und/oder innerhalb des äußeren Randbereichs des Köchers angeordnet sein kann. Hierbei kann als äußerer Rand des Köchers auch der äußere Randbereich und somit auch ein innerer Anschlag im äußeren Randbereich des Köchers erfindungsgemäß verstanden werden. Als "äußerer Rand" des Köchers muss nicht zwingend der "äußerste, oberste Rand" des Köchers angesehen werden.

Insbesondere kann der Köcher im äußeren Randbereich eine umlaufende Stufe bzw. einen umlaufenden inneren Anschlag zum bündigen Abschluss mit dem Anschlag des Saugreinigungsvorsatzes im Nicht-Gebrauchszustand aufweisen.

Insbesondere ist der Schlauch der Gebläseeinrichtung mit dem der Saugöffnung abgewandten Anschlussende des Griffabschnitts verbunden. Vorzugsweise ist eine formschlüssige und/oder kraftschlüssige Verbindung vorgesehen.

Die Gebläseeinrichtung ist insbesondere derart ausgebildet, dass im Saugkanal während des Saugbetriebes ein Unterdruck zwischen 0,3 bis 0,8 bar, bevorzugt zwischen 0,4 bis 0,6 bar, vorherrscht. Durch den vorgenannten Unterdruck kann eine effektive Absaugung der Schmutzpartikel gewährleistet werden.

Weiterhin ist bei einer besonders bevorzugten Ausführungsform vorgesehen, dass die Gebläseeinrichtung eine Steuereinrichtung aufweist, die die der Gebläseeinrichtung zugeführte elektrische Energie zur Erzeugung des Unterdrucks während des in den Köcher eingesetzten Zustands des Saugreinigungsvorsatzes verringert.

Der Steuereinrichtung kann wenigstens ein Drucksensor zugeordnet sein, der den benötigen Unterdruck bestimmt, der wiederum zur Regelung und/oder Steuerung des Drucks verwendet werden kann. Es versteht sich, dass durch einen zumindest im Wesentlichen druckdichten Abschluss zwischen dem Anschlag und dem Köcher weniger elektrische Energie benötigt wird, da die zu überbrückende Druckdifferenz im Vergleich zum Gebrauchszustand während der Innenreinigung von Kraftfahrzeugen deutlich reduziert werden kann.

Vorzugsweise kann mit einer Gebläseeinrichtung eine Vielzahl von Saugreinigungsvorsätzen, bevorzugt wenigstens zwei, verbunden sein. Es versteht sich, dass letztlich auch die der Gebläseeinrichtung zugeführte elektrische Energie verringert werden kann, sobald wenigstens ein Saugreinigungsvorsatz in einem Köcher angeordnet ist. Erfindungsgemäß kann ein kontinuierlicher Saugbetrieb vorgesehen sein, so dass ein druckdichter Abschluss zwischen Köcher und Anschlag vorteilhaft hinsichtlich der Energie- und/oder Betriebskosten ist.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, auch wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigt
- Fig. 1: eine schematische Seitenansicht auf einen erfindungsgemäßen Saugreinigungsvorsatz,
- Fig. 2: eine schematische perspektivische Darstellung des in Fig. 1 gezeigten erfindungsgemäßen Saugreinigungsvorsatzes,
- Fig. 3: eine schematische perspektivische Explosionsansicht des in Fig. 1 gezeigten erfindungsgemäßen Saugreinigungsvorsatzes,
- Fig. 4: eine schematische Darstellung der erfindungsgemäßen Reinigungsvorrichtung,
- Fig. 5a: eine schematische perspektivische Darstellung des erfindungsgemäßen Köchers,
- Fig. 5b: eine schematische perspektivische Darstellung einer weiteren Ausführungsform des erfindungsgemäßen Köchers,
- Fig. 6: eine schematische Seitenansicht einer weiteren Ausführungsform des in den Köchers eingesetzten erfindungsgemäßen Saugreinigungsvorsatzes,
- Fig. 7: eine schematische perspektivische Darstellung einer weiteren Ausführungsform der erfindungsgemäßen Reinigungsvorrichtung,
- Fig. 8: eine schematische Darstellung einer weiteren Ausführungsform der erfindungsgemäßen Reinigungsvorrichtung,
- Fig. 9: eine schematische perspektivische Darstellung eines Abschnitts des erfindungsgemäßen Saugreinigungsvorsatzes,
- Fig. 10: eine schematische perspektivische Darstellung eines weiteren Abschnitts des erfindungsgemäßen Saugreinigungsvorsatzes,
- Fig. 11: eine schematische Querschnittsdarstellung des erfindungsgemäßen Saugreinigungsvorsatzes und
- Fig. 12: eine schematische Querschnittsdarstellung des in einem Köcher eingesetzten erfindungsgemäßen Saugreinigungsvorsatzes.

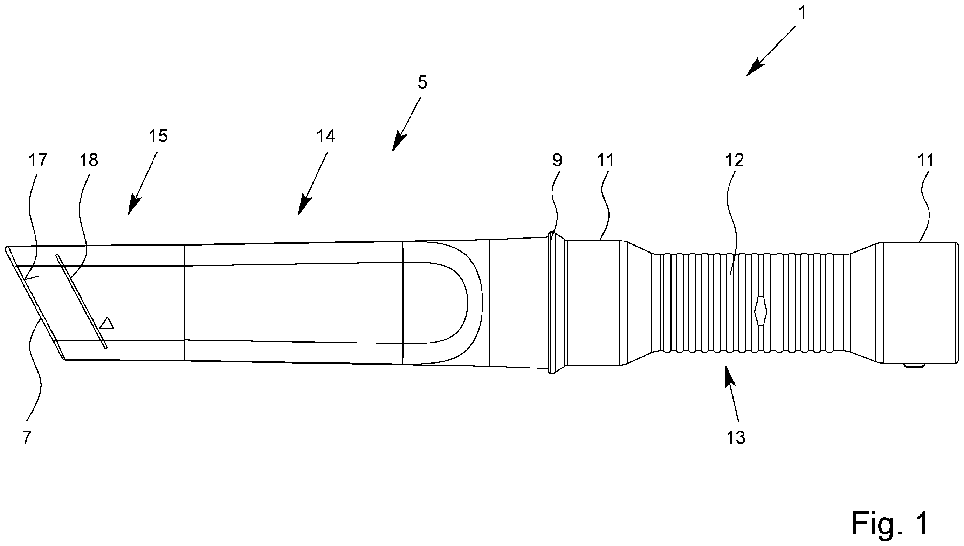

Fig. 1 zeigt einen Saugreinigungsvorsatz 1 einer Reinigungsvorrichtung 2 zur Verwendung zur Innenreinigung von Kraftfahrzeugen mittels einer Saugluftströmung. Der Saugreinigungsvorsatz 1 ist zum Einsetzen und zur Halterung in einem Köcher 3 im Nicht-Gebrauchszustand vorgesehen.

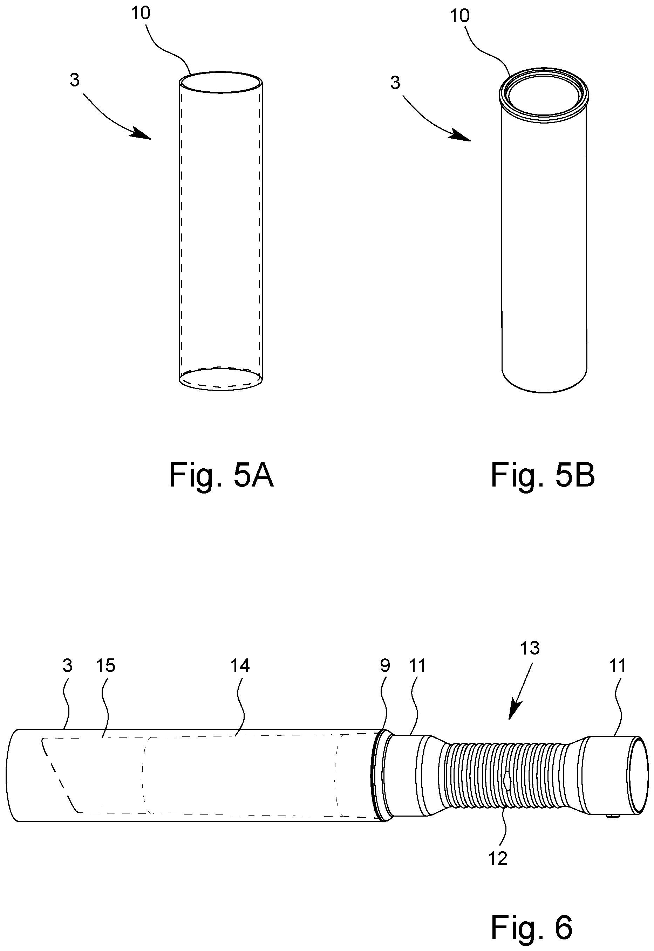

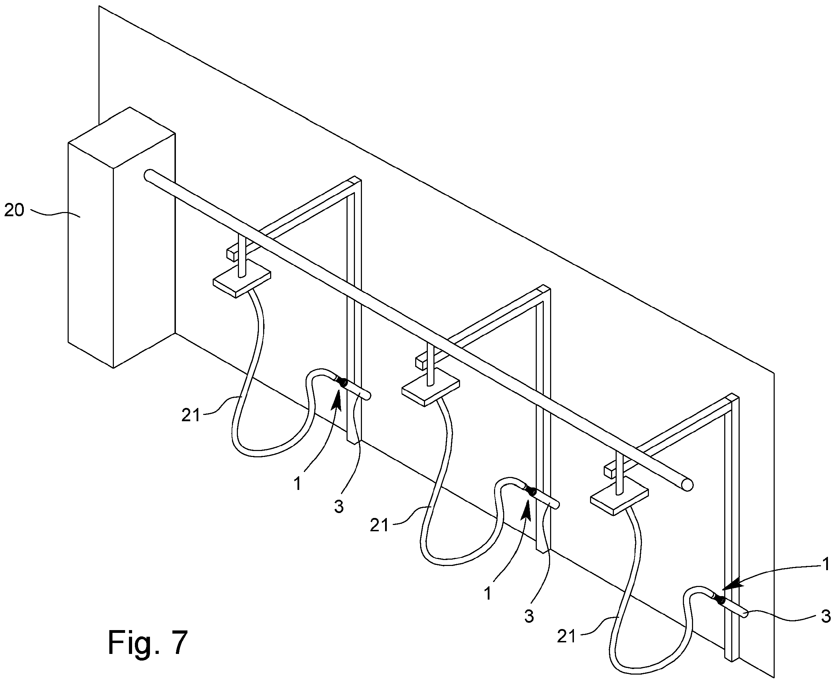

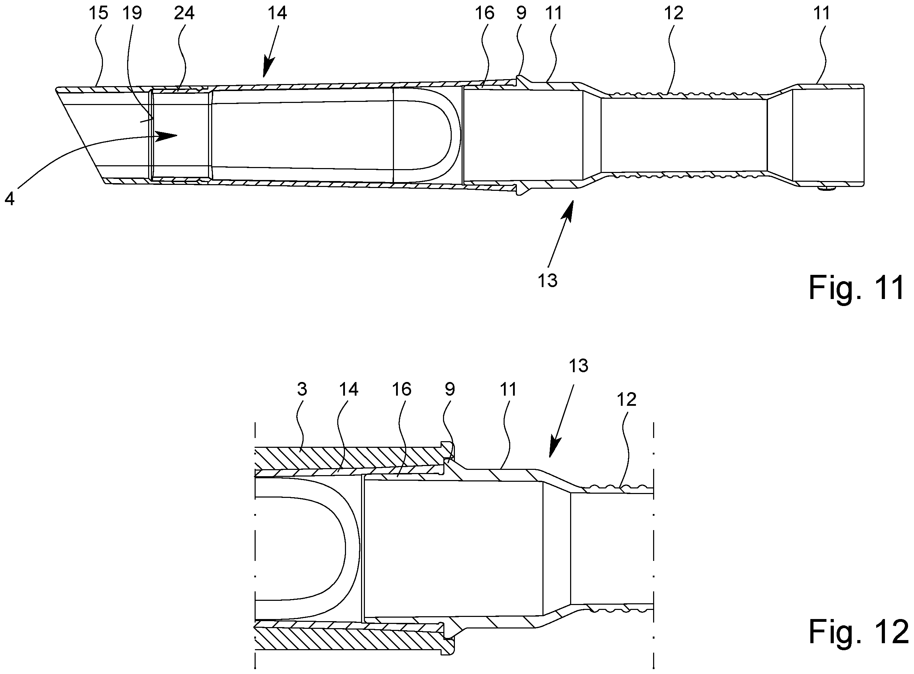

Eine Halterung des Saugreinigungsvorsatzes 1 in dem Köcher 3 ist beispielsweise in den Fig. 6 und 7 dargestellt. Der Nicht-Gebrauchszustand liegt letztlich vor und nach der Innenreinigung der Kraftfahrzeuge vor bzw. dann, wenn der Saugreinigungsvorsatz 1 nicht zur Innenreinigung genutzt wird. In diesem Zustand kann der Saugreinigungsvorsatz in den Köcher 3, wie aus Fig. 7 ersichtlich, eingesetzt und darin gehalten werden. Der Saugreinigungsvorsatz 1 weist einen innenliegenden Saugkanal 4 - wie aus Fig. 11 ersichtlich - zum Führen der Saugluftströmung auf. Der Saugkanal 4 ist innenliegend in dem Gehäuse 5 des Saugreinigungsvorsatzes 1 angeordnet. Auf der Außenseite des Gehäuses 5 ist ein Griffbereich 6 vorgesehen.

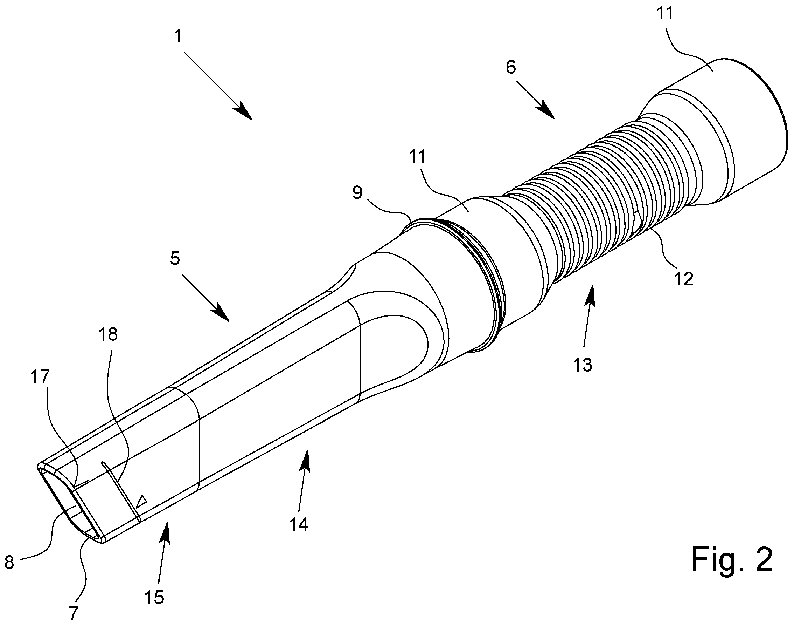

Als Griffbereich 6 wird derjenige Bereich des Saugreinigungsvorsatzes 1 verstanden, der bei in den Köcher 3 eingesetzten Zustand des Saugreinigungsvorsatzes 1 außerhalb des Köchers 3 bzw. oberhalb des äußeren Randes 10 des Köchers 3 angeordnet ist. Der Saugkanal 4 mündet an seinem äußeren Ende 7 in eine Saugöffnung 8, wie in Fig. 2 gezeigt.

Fig. 2 zeigt auch, dass außenseitig am Gehäuse 5 zwischen der Saugöffnung 8 und dem Griffbereich 6 ein über den Griffbereich 6 überstehender Anschlag 9 zum Zusammenwirken mit dem äußeren Rand 10 des Köchers 3 vorgesehen ist. Ein Zusammenwirken zwischen dem Anschlag 9 und dem äußeren Rand 10 bzw. der äußeren Randkante des Köchers 3 ist unter anderem in Fig. 6 gezeigt.

Nicht dargestellt ist, dass der Anschlag 9 als Stufe ausgebildet ist.

Fig. 6 zeigt, dass der Anschlag 9 bündig mit dem äußeren Rand 10 des Köchers 3 abschließt bzw. auf diesem aufliegt, insbesondere wobei der Anschlag 9 über den äußeren Rand 10 des Köchers 3 übersteht. Das Zusammenwirken zwischen dem Anschlag 9 und dem äußeren Rand 10 des Köchers 3 stellt die Bildung eines zumindest im Wesentlichen druckdichten Abschlusses zwischen dem Köcher 3 und dem Saugreinigungsvorsatz 1 im eingesetzten Zustand des Saugreinigungsvorsatzes 1 in den Köcher 3 sicher. Dabei versteht es sich, dass mit dem Ausdruck "druckdicht" keine absolute Druckdichtigkeit erreicht wird. "Druckdicht" bezeichnet letztlich den Zustand, wenn der Anschlag 9 bündig auf dem äußeren Rand 10 des Köchers 3 aufliegt.

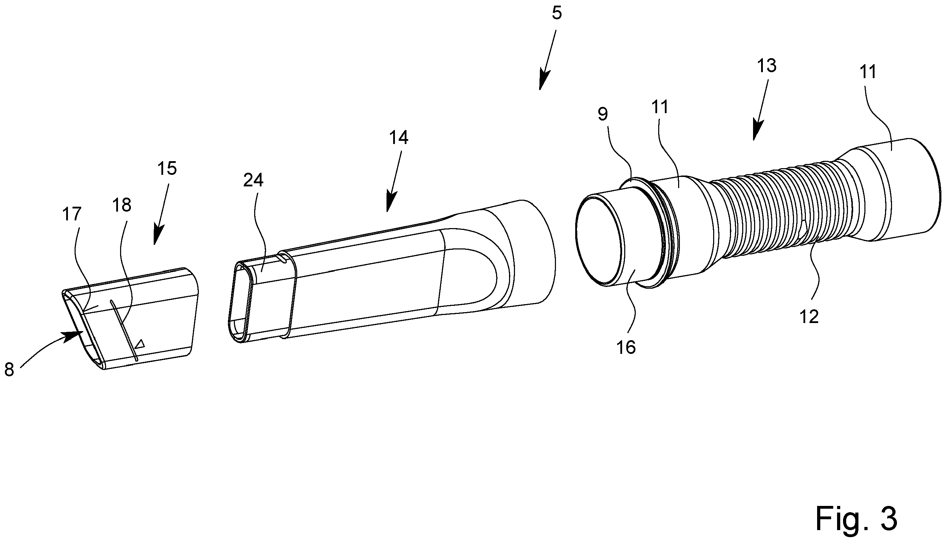

Fig. 3 zeigt, dass der Anschlag 9 als umlaufender, insbesondere ringförmiger, Vorsprung ausgebildet ist. Letztlich ist der Anschlag 9 an seiner dem äußeren Rand 10 des Köchers 3 zugewandten Anordnungsfläche zumindest im Wesentlichen gerade, nicht unterbrochen und/oder eben ausgebildet. Der Anschlag 9 kann korrespondierend zum äußeren Rand 10 des Köchers 3 ausgebildet sein, so dass sich eine im eingesetzten Zustand des Saugreinigungsvorsatzes 1 in den Köcher 3 druckdichte und reibschlüssige Verbindung ergibt.

Die Fig. 1 bis 3 zeigen, dass der Saugreinigungsvorsatz 1 und das Gehäuse 5 einen Griffabschnitt 13 aufweisen. Der Griffabschnitt 13 weist zwei äußere Anschlussenden 11 und einen zwischen den Anschlussenden 11 vorgesehenen Griffabschnittsbereich 12 auf. Der Griffabschnittsbereich 12 kann als Griffbereich 6 dienen und derart ausgebildet sein, dass ein Umfassen des Griffbereichs 6 mit einer Hand eines Benutzers ermöglicht wird.

Fig. 3 zeigt, dass das Anschlussende 11 und der Griffabschnittsbereich 12 eine zumindest im Wesentlichen hohlzylindrische Form aufweisen.

In Fig. 1 ist gezeigt, dass der Griffabschnittsbereich 12 letztlich von außen frei zugänglich ist und nicht durch weitere Komponenten, insbesondere nicht durch einen den Griffabschnittsbereich 12 überspannenden Bügel, behindert wird. Letztlich kann ein Nutzer von jeder Seite bzw. in jeder Position den Griffabschnittsbereich 12 des Saugreinigungsvorsatzes 1 umfassen. Der Saugreinigungsvorsatz 1 kann zur Innenreinigung von Kraftfahrzeugen einfach geführt werden.

Ferner zeigt Fig. 1, dass wenigstens ein Außendurchmesser eines Anschlussendes 11, im dargestellten Ausführungsbeispiel beide Außendurchmesser der Anschlussenden 11, größer als der Außendurchmesser des Griffabschnittsbereichs 12 ausgebildet ist. Insbesondere ist der Außendurchmesser wenigstens eines Anschlussendes 11 um wenigstens 10% größer als der Außendurchmesser des Griffabschnittsbereichs 12 ausgebildet. Durch den vorgenannten Unterschied zwischen den Außendurchmessern ergibt sich eine definierte Länge des Griffabschnittsbereichs 12 und es wird im Übrigen eine Begrenzung der Bewegung der Hand auf dem Griffabschnittsbereich 12 im Benutzungszustand vorgegeben.

Fig. 6 zeigt, dass der Anschlag 9 letztlich eine Begrenzung der Einschubbewegung des Saugreinigungsvorsatzes 1 in den Köcher 3 darstellt. Insbesondere ist keine Bewegung über den Anschlag 9 hinaus in den Köcher 3 hinein möglich. Dies ist vor allem deshalb von Bedeutung, da beim Stand der Technik der Saugreinigungsvorsatz 1 häufig vom Nutzer sehr fest in den Köcher 3 hineingesteckt wird und sich dadurch eine sehr feste reibschlüssige Verbindung ergibt, die es nicht selten sehr schwierig macht, den Saugreinigungsvorsatz 1 wieder aus dem Köcher 3 herauszuziehen. Diese Problematik wird bei der Erfindung komplett vermieden.

Fig. 3 zeigt, dass der Anschlag 9 an dem der Saugöffnung 8 zugewandten Anschlussende 11 angeordnet ist. Der Anschlag 9 steht dabei außenseitig über das Anschlussende 11 über.

Darüber hinaus zeigen die Fig. 1 bis 3, dass der Griffabschnittsbereich 12 außenseitig eine Riffelung und/oder eine strukturierte Oberfläche aufweist. Die Riffelung kann letztlich in Art von aneinander gereihten Rillen ausgebildet sein.

Aus Fig. 3 wird ersichtlich, dass der Saugreinigungsvorsatz 1 wenigstens dreiteilig ausgebildet ist. Die einzelnen Komponenten des Saugreinigungsvorsatzes 1 und des Gehäuses 5 können ineinander einsteckbar ausgebildet sein. Letztlich kann eine lösbare Verbindung zwischen den mehrteiligen Komponenten des Gehäuses 5 des Saugreinigungsvorsatzes 1 vorgesehen sein.

Fig. 3 zeigt, dass das Gehäuse 5 einen mit dem Griffabschnitt 13 lösbar verbindbaren Gehäusestutzen 14 aufweist. Des Weiteren ist ein mit dem Gehäusestutzen 14 lösbar verbindbares Endstück 15 vorgesehen. Der Gehäusestutzen 14 kann mit dem Griffabschnitt 13 formschlüssig, kraftschlüssig und/oder reibschlüssig lösbar verbunden sein. Das Endstück 15 kann mit dem Gehäusestutzen 14 wiederum ebenfalls formschlüssig, kraftschlüssig und/oder reibschlüssig verbunden sein. Letztlich ist die Verbindung derart ausgebildet, dass ein Lösen der vorgenannten Komponenten während der Benutzung des Saugreinigungsvorsatzes 1 zumindest im Wesentlichen vermieden werden kann.

Ferner zeigt Fig. 3, dass der Griffabschnittsbereich 12 und/oder der Griffabschnitt 13 rotationssymmetrisch und/oder spiegelsymmetrisch zu einer Mittellängsachse ausgebildet ist.

Zudem zeigt Fig. 3, dass der Griffabschnitt 13 mit dem Anschlussbereich 16, der an dem Anschlussende 11 vorgesehen ist, in den Gehäusestutzen 14 einsteckbar ist. Alternativ oder zusätzlich kann der Gehäusestutzen 14 in den Griffabschnitt 13 einsteckbar sein.

Weiter zeigt Fig. 3, dass der Gehäusestutzen 14 mit einem Anschlussbereich 24 in das Endstück 15 einsteckbar ausgebildet ist. Alternativ oder zusätzlich kann das Endstück 15 auch in den Gehäusestutzen 14 einsteckbar ausgebildet sein. Zu den jeweiligen Anschlussbereichen 16, 24 sind korrespondierende Aufnahmebereiche vorgesehen.

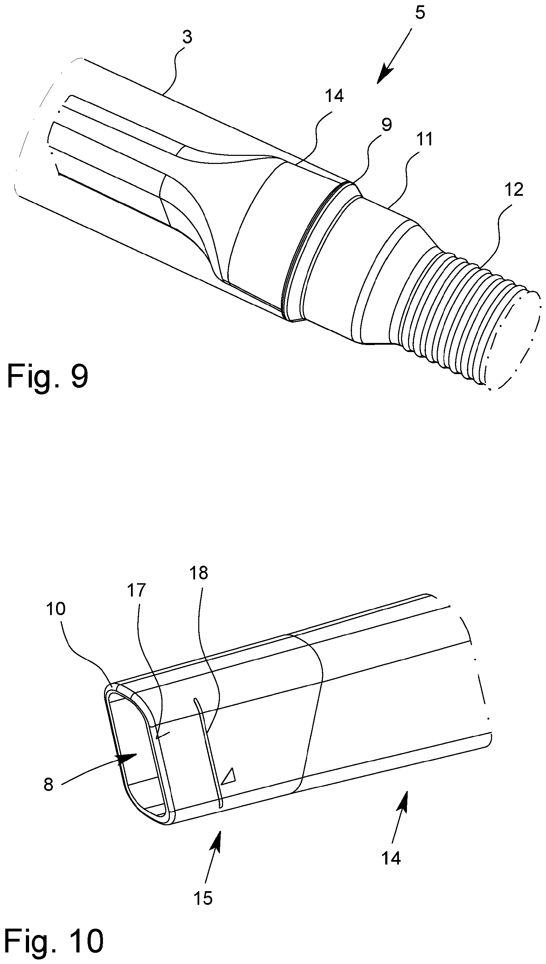

Fig. 9 zeigt, dass im Anschluss an den zu dem Anschlussbereich 16 korrespondierenden Aufnahmebereich eine, insbesondere konische, Verjüngung des Saugkanals 4 des Gehäusestutzens 14 vorgesehen ist. Letztlich wird eine zumindest im Wesentlichen hohlquaderförmige bzw. schlitzartige Form gebildet, wie ebenfalls in Fig. 3 dargestellt.

Folglich kann sich der Saugkanal 4 sowohl im Bereich des Griffabschnittsbereichs 12 und des Gehäusestutzens 14 sich hin zur Saugöffnung 8 verjüngen.

Fig. 9 zeigt, dass der Anschlag 9 unmittelbar an den Gehäusestutzen 14 angrenzt. Dabei steht der Anschlag 9 sowohl über das Anschlussende 11 als auch über den Gehäusestutzen 14 über. Dabei weist der Anschlag 9 eine die Materialstärke des Gehäusestutzens 14 überragende Breite auf. Die Breite bzw. Höhe des Anschlages 9 ist insbesondere in Abhängigkeit des Einsteckweges des Saugreinigungsvorsatzes 1 in den Köcher 3 und in Abhängigkeit des äußeren Randes 10 des Köchers 3 ausgebildet.

Nicht dargestellt ist, dass der, insbesondere als Stufe ausgebildete, Anschlag 9 außenseitig an dem Gehäusestutzen 14 angeordnet ist. In diesem Fall müsste der Anschlag 9 nicht zwingend über den Griffbereich 6, den Griffabschnitt 13 und/oder über das Anschlussende 11 überstehen. Allerdings sollte der Anschlag 9 zur Begrenzung der Einsteckbewegung in den Köcher 3 ausgebildet sein. Dies setzt letztlich voraus, dass hinter dem Anschlag 9 - der Saugöffnung 8 zugewandt - keine den Anschlag 9 übersteigende Erhöhung oder Vergrößerung des Saugreinigungsvorsatzes 1 bzw. des Gehäuses 5 vorgesehen ist.

Fig. 10 zeigt, dass das Endstück 15 an dem die Saugöffnung 8 bildenden Saugende eine Schräge 17 aufweist. Die Schräge 17 kann insbesondere als eine 45° ± 15° Schräge ausgebildet sein.

Aus Fig. 10 geht ferner hervor, dass das Endstück 15 außenseitig eine, insbesondere parallel zur Schräge 17 verlaufende, Markierung 18 als Verschleißanzeige aufweist. Die Markierung 18 ist derart angeordnet, dass sie an dem mit dem Gehäusestutzen 14 verbundenen Endstück 15 beabstandet zu dem der Saugöffnung 8 zugewandten äußeren Rand 19 des Gehäusestutzens 14 angeordnet ist. Der äußere Rand 19 des Gehäusestutzens 14 ist in Fig. 11 gezeigt.

Fig. 11 zeigt zudem, dass auch ein formschlüssiges Ineinandergreifen des Endstücks 15 in den Anschlussbereich 24 des Gehäusestutzens 14 vorgesehen sein kann.

Nicht dargestellt ist, dass das Material des Gehäuses 5, des Endstücks 15, des Gehäusestutzens 14 und/oder des Griffabschnitts 13 einen, insbesondere thermoplastischen, Kunststoff aufweist. Als Kunststoff als Polyethylen (PE), Polypropylen (PP), Polyvinylchlorid (PVC) und/oder Polystyrol (PS) vorgesehen sein.

Darüber hinaus kann die Querschnittsfläche des Saugkanals 4 zwischen 100 mm² bis 1000 m² liegen. Ferner kann die Querschnittsfläche des Saugkanals 4 sich längs des Saugreinigungsvorsatzes 1 hin zur Saugöffnung 8 reduzieren.

Nicht dargestellt ist, dass eine Leuchteinrichtung dem Saugreinigungsvorsatz 1 zugeordnet sein kann. Die Leuchteinrichtung kann wenigstens eine LED aufweisen. Darüber hinaus kann die Leuchteinrichtung am Gehäuse 5, am Gehäusestutzen 14 und/oder am Endstück 15 gehalten sein. Die Leuchteinrichtung kann über wenigstens eine Leitung zur Stromführung verbunden sein. Die Leitung kann mit einem Stromanschluss, der am Bereich des Griffbereichs 6 vorgesehen sein kann, verbunden sein. Die Leitung kann innenseitig des Gehäuses 5 geführt werden.

Weiter ist nicht dargestellt, dass die Leuchteinrichtung im Gehäusestutzen 14 und/oder Endstück 15 in einer entsprechenden Aufnahme in Form eines Kanals integriert sein kann.

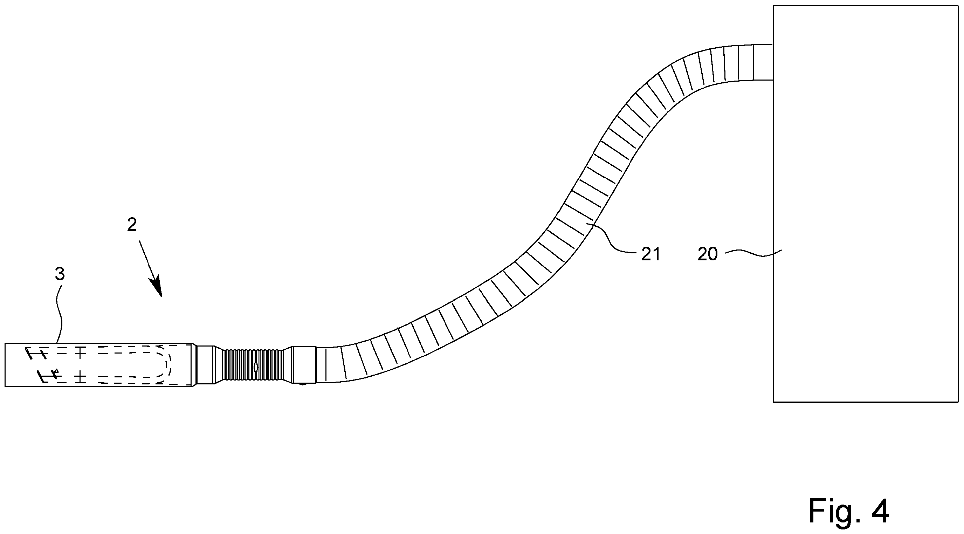

Fig. 4 zeigt eine Reinigungsvorrichtung 2 zur Verwendung zur Innenreinigung von Kraftfahrzeugen. Die Reinigungsvorrichtung 2 weist einen Saugreinigungsvorsatz 1 nach einer der zuvor beschriebenen Ausführungsformen auf. Ein Köcher 3 ist zur Halterung des Saugreinigungsvorsatzes 1 im Nicht-Gebrauchszustand vorgesehen. Eine Gebläseeinrichtung 20 ist dem Saugkanal 4 zugeordnet und dient zur Erzeugung eines Unterdrucks. Die Gebläseeinrichtung 20 ist über einen Schlauch 21 mit dem Saugkanal 4 des Saugreinigungsvorsatzes 1 verbunden.

Insbesondere ist der Schlauch 21 mit dem der Saugöffnung 8 abgewandten Anschlussende 11 des Saugreinigungsvorsatzes 1 verbunden.

In Fig. 5a ist der Köcher 3 dargestellt. Der Köcher 3 kann hohlzylinderförmig ausgebildet sein. Darüber hinaus ist der Köcher 3 endseitig an seiner Unterseite geschlossen und weist der Unterseite gegenüberliegend eine Köcheröffnung auf.

Bei dem in Fig. 5a dargestellten Köcher 3 ist vorgesehen, dass der äußere Rand 10 des Köchers 3 zumindest im Wesentlichen bündig mit dem Anschlag 9 des Saugreinigungsvorsatzes 1 im Nicht-Gebrauchszustand abschließt, wie in Fig. 6 gezeigt.

Fig. 5b zeigt, dass als äußerer Rand 10 des Köchers 3 der äußere Randbereich verstanden werden kann. Der äußere Rand 10 weist in dem dargestellten Ausführungsbeispiel einen inneren Anschlag auf, der zumindest im Wesentlichen bündig mit dem Anschlag 9 des Saugreinigungsvorsatzes 1 im Nicht-Gebrauchszustand abschließen kann. In diesem Zusammenhang kann der Anschlag 9 des Saugreinigungsvorsatzes 1 im Nicht-Gebrauchszustand und im im Köcher 3 eingesetzten Zustand zumindest bereichsweise von dem äußeren Rand 10 des Köchers 3 umgeben sein, wie aus Fig. 12 ersichtlich.

Fig. 12 zeigt, dass der Außendurchmesser des äußeren Randbereichs 10 des Köchers 3 größer als der Außendurchmesser des Anschlags 9 des Saugreinigungsvorsatzes 1 ausgebildet ist. In weiteren Ausführungsformen kann der Außendurchmesser des äußeren Randbereichs 10 des Köchers 3 zumindest im Wesentlichen gleich dem Außendurchmesser des Anschlags 9 des Saugreinigungsvorsatzes 1 ausgebildet sein. Dabei liegen die einander zugewandten Flächen des Anschlags 9 und der im Köcher 3 gebildeten Stufe aufeinander auf, so dass sich letztlich die zuvor beschriebene Anschlagfunktion ergibt. Fig. 12 zeigt weiter, dass der Innendurchmesser des inneren Anschlags des äußeren Rands 10 des Köchers 3 größer oder gleich dem größten Außendurchmesser des in dem im Köcher 3 eingesetzten Zustand hinter (d.h. der geschlossenen Unterseite des Köchers 3 zugewandt) dem inneren Anschlag des Köchers 3 angeordneten vorderen Bereiches des Saugreinigungsvorsatzes 1 ausgebildet ist.

Der Anschlag 9 des Saugreinigungsvorsatzes 1 wirkt derart mit dem äußeren Rand 10 des Köchers 3 zusammen, dass sich ein zumindest im Wesentlichen druckdichter Abschluss ergibt. Der druckdichte Abschluss ergibt sich im Nicht-Gebrauchszustand. Der Unterdruck wird insbesondere kontinuierlich durch die Gebläseeinrichtung 20 bereitgestellt. Durch den druckdichten Abschluss kann ein zumindest im Wesentlichen in sich geschlossenes System bereitgestellt werden, sofern die Saugreinigungsvorrichtung 2 lediglich einen Reinigungsvorsatz 1 aufweist.

In Fig. 7 ist gezeigt, dass die Reinigungsvorrichtung 2 eine Mehrzahl von Saugreinigungsvorsätzen 1 aufweist. Dabei kann auch lediglich ein Saugreinigungsvorsatz 1 in den Köcher 3 eingesetzt werden, während ein weiterer Saugreinigungsvorsatz 1 benutzt wird. In diesem Fall wäre kein in sich geschlossenes System vorhanden, allerdings wird die für die Gebläseeinrichtung 20 benötigte elektrische Energie durch die Anordnung wenigstens eines Saugreinigungsvorsatzes 1 in dem Köcher 3 und den druckdichten Abschluss zwischen dem Köcher 3 und dem Saugreinigungsvorsatz 1 verringert.

Fig. 6 zeigt, dass der Anschlag 9 bündig mit dem äußeren Rand 10 des Köchers 3 abschließt und auf diesen äußeren Rand 10 aufliegt.

Nicht dargestellt ist, dass im Saugkanal 4 während des Saugbetriebes ein Unterdruck zwischen 0,3 bis 0,8 bar vorgesehen ist.

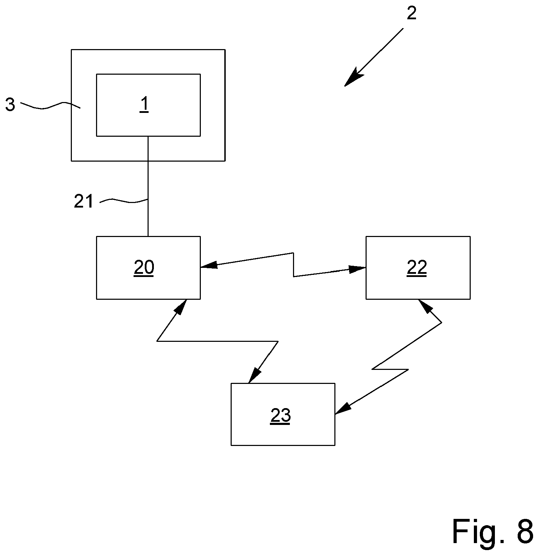

Fig. 8 zeigt, dass die Gebläseeinrichtung 20 eine Steuereinrichtung 22 aufweist. Die Steuereinrichtung 22 kann die der Gebläseeinrichtung 20 zugeführte elektrische Energie von einer Energieversorgungseinrichtung 23 zur Erzeugung des Unterdrucks während des in den Köcher 3 eingesetzten Zustandes des Saugreinigungsvorsatzes 1 verringern.

Insbesondere kann der Steuereinrichtung 22 wenigstens ein Drucksensor zugeordnet sein, der insbesondere die zu überwindende Druckdifferenz misst und/oder bestimmt. Sofern der Saugreinigungsvorsatz 1 in den Köcher 3 eingesetzt ist und sich ein druckdichter Abschluss zwischen dem äußeren Rand 10 des Köchers 3 und dem Anschlag 9 ergibt, ist insbesondere die Druckdifferenz sehr gering. Dadurch kann die von der Energieversorgungseinrichtung 23 bereitgestellte elektrische Energie für die Gebläseeinrichtung 20 reduziert werden.

Im Gebrauchszustand ist jedoch eine Druckdifferenz zum Atmosphärendruck (ca. 1 bar) vorhanden, die letztlich den "Saugbetrieb" sicherstellt. Zum Bereitstellen der kontinuierlichen Saugluftströmung und des dafür benötigten Unterdrucks wird insbesondere im Gebrauchszustand die Druckdifferenz gehalten und somit auch die dafür benötigte elektrische Energie durch die Energieversorgungseinrichtung 23 bereitgestellt.

### Bezugszeichenliste:

- 1: Saugreinigungsvorsatz
- 2: Reinigungsvorrichtung
- 3: Köcher
- 4: Saugkanal
- 5: Gehäuse
- 6: Griffbereich
- 7: äußeres Ende von 4
- 8: Saugöffnung
- 9: Anschlag
- 10: äußerer Rand von 3
- 11: Anschlussende
- 12: Griffabschnittsbereich
- 13: Griffabschnitt
- 14: Gehäusestutzen
- 15: Endstück
- 16: Anschlussbereich von 13
- 17: Schräge
- 18: Markierung
- 19: äußerer Rand von 14
- 20: Gebläseeinrichtung
- 21: Schlauch
- 22: Steuereinrichtung
- 23: Energieversorgungseinrichtung
- 24: Anschlussbereich von 14

## Patentansprüche

1. Saugreinigungsvorsatz (1) einer Reinigungsvorrichtung (2) zur Verwendung zur Innenreinigung von Kraftfahrzeugen mittels einer Saugluftströmung und vorgesehen zum Einsetzen und zur Halterung in einen Köcher (3) im Nicht-Gebrauchszustand, mit einem einen innenliegenden Saugkanal (4) zum Führen der Saugluftströmung aufweisenden Gehäuse (5) und einem an der Außenseite des Gehäuses (5) vorgesehenen Griffbereich (6), wobei der Saugkanal (4) an seinem äußeren Ende (7) in eine Saugöffnung (8) mündet, **dadurch gekennzeichnet, dass** außenseitig am Gehäuse (5) zwischen der Saugöffnung (8) und dem Griffbereich (6) ein über den Griffbereich (6) überstehender Anschlag (9) zum Zusammenwirken mit dem äußeren Rand (10) des Köchers (3) vorgesehen ist, wobei ein zwei äußere Anschlussenden (11) und einen zwischen den Anschlussenden (11) vorgesehenen Griffabschnittsbereich (12) aufweisender Griffabschnitt (13) vorgesehen ist, wobei wenigstens ein Außendurchmesser eines Anschlussendes (11) größer ist als der Außendurchmesser des Griffabschnittsbereichs (12), wobei der Anschlag (9) als umlaufender Vorsprung ausgebildet ist.

2. Saugreinigungsvorsatz nach Anspruch 1, **dadurch gekennzeichnet, dass** der Anschlag (9) als umlaufender, ringförmiger und kreisrunder, Vorsprung ausgebildet ist.

3. Saugreinigungsvorsatz nach Anspruch 1 oder 2, **dadurch gekennzeichnet, dass** der Anschlag (9) an dem der Saugöffnung (8) zugewandten Anschlussende (11) angeordnet ist, insbesondere wobei der Anschlag (9) außenseitig über das Anschlussende (11) übersteht.

4. Saugreinigungsvorsatz nach einem der vorherigen Ansprüche, **dadurch gekennzeichnet, dass** der Griffabschnittsbereich (12) außenseitig eine Riffelung und/oder eine strukturierte Oberfläche aufweist.

5. Saugreinigungsvorsatz nach einem der vorherigen Ansprüche, **dadurch gekennzeichnet, dass** der Saugreinigungsvorsatz (1) wenigstens dreiteilig ausgebildet ist.

6. Saugreinigungsvorsatz nach einem der vorherigen Ansprüche, **dadurch gekennzeichnet, dass** das Gehäuse (5) einen mit dem Griffabschnitt (13) lösbar verbindbaren Gehäusestutzen (14) aufweist, insbesondere wobei das Gehäuse (9) ferner ein mit dem Gehäusestutzen (14) lösbar verbindbares Endstück (15) aufweist und/oder wobei der Gehäusestutzen (14) mit dem Griffabschnitt (13) und/oder das Endstück (15) mit dem Gehäusestutzen (14) formschlüssig, kraftschlüssig und/oder reibschlüssig verbunden ist.

7. Saugreinigungsvorsatz nach einem der vorherigen Ansprüche, **dadurch gekennzeichnet, dass** der Griffabschnitt (13) und/oder der Griffabschnittsbereich (12) rotationssymmetrisch und/oder spiegelsymmetrisch zu einer Mittellängsachse ausgebildet ist.

8. Saugreinigungsvorsatz nach Anspruch 6, **dadurch gekennzeichnet, dass** der Griffabschnitt (13) mit einem Anschlussbereich (16) in den Gehäusestutzen (14) einsteckbar ist und/oder dass der Gehäusestutzen (14) mit einem Anschlussbereich (24) in das Endstück (15) einsteckbar ist.

9. Saugreinigungsvorsatz nach einem der Ansprüche 6 und 8, **dadurch gekennzeichnet, dass** der über den Griffbereich (6) überstehende Anschlag (14) unmittelbar an den Gehäusestutzen (14) angrenzt, insbesondere wobei der Anschlag (9) über den Gehäusestutzen (14) übersteht.

10. Saugreinigungsvorsatz nach einem der Ansprüche 6, 8 und 9, **dadurch gekennzeichnet, dass** das Endstück (15) an dem die Saugöffnung (8) bildenden Saugende eine Schräge (17) aufweist und/oder dass das Endstück (15) außenseitig eine insbesondere parallel zur Schräge (17) verlaufende Markierung (18) als Verschleißanzeige aufweist, insbesondere wobei die Markierung (18) derart angeordnet ist, dass sie bei dem mit dem Gehäusestutzen (14) verbundenen eingesteckten Endstück (15) beabstandet zum der Saugöffnung (8) zugewandten äußeren Rand (19) des Gehäusestutzen (14) ist.

11. Saugreinigungsvorsatz nach einem der Ansprüche 6, 8, 9 und 10, **dadurch gekennzeichnet, dass** das Material des Gehäuses (5), des Endstücks (15), des Gehäusestutzens (14) und/oder des Griffabschnitts (13) einen, vorzugsweise thermoplastischen, Kunststoff, bevorzugt Polyethylen (PE), Polypropylen (PP), Polyvinylchlorid (PVC) und/oder Polystyrol (PS), aufweist und/oder daraus besteht.

12. Saugreinigungsvorsatz nach einem der vorherigen Ansprüche, **dadurch gekennzeichnet, dass** die Querschnittsfläche des Saugkanals (4) zwischen 100 mm² bis 1000 mm², bevorzugt zwischen 200 mm² bis 800 mm², weiter bevorzugt zwischen 300 mm² bis 600 mm² und insbesondere zumindest im Wesentlichen zwischen 400 mm² bis 500 mm², liegt.

13. Reinigungsvorrichtung (2) zur Verwendung zur Innenreinigung von Kraftfahrzeugen, mit einem Saugreinigungsvorsatz (1) mit einem einen innenliegenden Saugkanal (4) zum Führen der Saugluftströmung aufweisenden Gehäuse (5) und einem an der Außenseite des Gehäuses (5) vorgesehenen Griffbereich (6), wobei der Saugkanal (4) an seinem äußeren Ende (7) in eine Saugöffnung (8) mündet, wobei außenseitig am Gehäuse (5) zwischen der Saugöffnung (8) und dem Griffbereich (6) ein als Stufe ausgebildeter Anschlag (9) oder ein über den Griffbereich (6) überstehender Anschlag (9) zum Zusammenwirken mit dem äußeren Rand (10) des Köchers (3) vorgesehen ist,
wobei ein zwei äußere Anschlussenden (11) und einen zwischen den Anschlussenden (11) vorgesehenen Griffabschnittsbereich (12) aufweisender Griffabschnitt (13) vorgesehen ist, wobei wenigstens ein Außendurchmesser eines Anschlussendes (11) größer ist als der Außendurchmesser des Griffabschnittsbereichs (12),
mit einem Köcher (3) zur Halterung des Saugreinigungsvorsatzes (1) im Nicht-Gebrauchszustand und mit einer Gebläseeinrichtung (20) zur Erzeugung eines Unterdrucks, wobei die Gebläseeinrichtung (20) über einen Schlauch (2) dem Saugkanal (4) zugeordnet ist,
wobei der Köcher (3) insbesondere hohlzylinderförmig ausgebildet und endseitig geschlossen ist, wobei der Anschlag (9) des Saugreinigungsvorsatzes (1) derart mit dem äußeren Rand (10) des Köchers (3) zusammenwirkt, dass sich ein zumindest im Wesentlichen druckdichter Abschluss ergibt.

14. Reinigungsvorrichtung nach Anspruch 13, **dadurch gekennzeichnet, dass** der Anschlag (9) bündig auf dem äußeren Rand (10) des Köchers (3) aufliegt.

15. Reinigungsvorrichtung nach einem der Ansprüche 13 bis 14, **dadurch gekennzeichnet, dass** die Gebläseeinrichtung (20) eine Steuereinrichtung (22) aufweist, die die der Gebläseeinrichtung (20) zugeführte Energie zur Erzeugung des Unterdrucks während des in den Köcher (3) eingesetzten Zustand des Saugreinigungsvorsatzes (1) verringert.

## Claims

1. A suction cleaning attachment (1) of a cleaning device (2) for use for the interior cleaning of motor vehicles by means of a suction air flow and provided for insertion and for holding in a quiver (3) when not in use, with a housing (5) having an internal suction channel (4) for guiding the suction air flow and a grip region (6) provided on the outside of the housing (5), wherein the suction channel (4) leads into a suction opening (8) at its outer end (7),
**characterized in that**
on the outside of the housing (5) between the suction opening (8) and the grip region (6) a stop (9) projecting beyond the grip region (6) is provided for interaction with the outer edge (10) of the quiver (3),
wherein a grip section (13) is provided having two outer connection ends (11) and a grip section region (12) provided between the connection ends (11), wherein at least one outer diameter of a connection end (11) is larger than the outer diameter of the grip section region (12), wherein the stop (9) is formed as a circumferential projection.

2. Suction cleaning attachment according to claim 1, **characterized in that** the stop (9) is designed as a circumferential, annular and circular projection.

3. Suction cleaning attachment according to claim 1 or 2, **characterized in that** the stop (9) is arranged at the connection end (11) facing the suction opening (8), in particular wherein the stop (9) projecting externally beyond the connection end (11).

4. Suction cleaning attachment according to one of the previous claims, **characterized in that** the grip section region (12) has a corrugation and/or a structured surface on the outside.

5. Suction cleaning attachment according to one of the previous claims, **characterized in that** the suction cleaning attachment (1) is formed in at least three parts.

6. Suction cleaning attachment according to one of the previous claims, **characterized in that** the housing (5) has a housing connection piece (14) which can be releasably connected to the grip section (13), in particular wherein the housing (9) further has an end piece (15) which can be releasably connected to the housing connection piece (14), and/or wherein the housing connection piece (14) is connected to the grip section (13) and/or the end piece (15) is connected to the housing connection piece (14) in a form-locking, force-locking and/or friction-locking manner.

7. Suction cleaning attachment according to one of the previous claims, **characterized in that** the grip section (13) and/or the grip section region (12) is formed rotationally symmetrical and/or mirror-symmetrical to a central longitudinal axis.

8. Suction cleaning attachment according to claim 6, **characterized in that** the grip section (13) can be inserted with a connection region (16) into the housing connection piece (14) and/or that the housing connection piece (14) can be inserted with a connection region (24) into the end piece (15).

9. Suction cleaning attachment according to one of claims 6 and 8, **characterized in that** the stop (14) projecting beyond the grip region (6) directly adjoins the housing connection piece (14), in particular wherein the stop (9) projects beyond the housing connection piece (14).

10. Suction cleaning attachment according to one of claims 6, 8 and 9, **characterized in that** the end piece (15) has a bevel (17) at the suction end forming the suction opening (8), and/or
**in that** the end piece (15) has on the outside a marking (18) as a wear indicator extending in particular parallel to the bevel (17), in particular wherein the marking (18) is arranged in such a way that, when the inserted end piece (15) is connected to the housing connection piece (14), it is spaced apart from the outer edge (19) of the housing connection piece (14) facing the suction opening (8).

11. Suction cleaning attachment according to one of claims 6, 8, 9 and 10, **characterized in that** the material of the housing (5), of the end piece (15), of the housing connection piece (14) and/or of the grip section (13) comprises and/or consists of a, preferably thermoplastic, plastic, preferably polyethylene (PE), polypropylene (PP), polyvinyl chloride (PVC) and/or polystyrene (PS).

12. Suction cleaning attachment according to one of the preceding claims, **characterized in that** the cross-sectional area of the suction channel (4) is between 100 mm² to 1000 mm², preferably between 200 mm² to 800 mm², more preferably between 300 mm² to 600 mm² and in particular at least substantially between 400 mm² to 500 mm².

13. Cleaning device (2) for use in the interior cleaning of motor vehicles, with a suction cleaning attachment (1) with a housing (5) having an internal suction channel (4) for guiding the suction air flow and a grip region (6) provided on the outside of the housing (5), wherein the suction channel (4) leads into a suction opening (8) at its outer end (7),
wherein on the outside of the housing (5) between the suction opening (8) and the grip region (6), a stop (9) constructed as a step or a stop (9) projecting beyond the grip region (6) is provided for interaction with the outer edge (10) of the quiver (3),
wherein a grip section (13) is provided having two outer connection ends (11) and a grip section region (12) provided between the connection ends (11), wherein at least one outer diameter of a connection end (11) is larger than the outer diameter of the grip section region (12),
with a quiver (3) for holding the suction cleaning attachment (1) in the non-used state and with a blower device (20) for generating a negative pressure, wherein the blower device (20) is assigned to the suction channel (4) via a hose (2),
wherein the quiver (3) is designed in particular in the shape of a hollow cylinder and is closed at the ends, wherein the stop (9) of the suction cleaning attachment (1) interacts with the outer edge (10) of the quiver (3) in such a way that an at least substantially pressure-tight closure is produced.

14. Cleaning device according to claim 13, **characterized in that** the stop (9) sits flush on the outer edge (10) of the quiver (3).

15. Cleaning device according to any one of claims 13 to 14, **characterized in that** the blower device (20) has a control device (22) which reduces the energy supplied to the blower device (20) for generating the negative pressure during the insertion of the suction cleaning attachment (1) into the quiver (3).

## Revendications

1. Accessoire de nettoyage par aspiration (1) d'un appareil de nettoyage (2) destiné à être utilisé pour le nettoyage de l'intérieur de véhicules automobiles au moyen d'un courant d'air d'aspiration et prévu pour être inséré et maintenu dans un carquois (3) à l'état de non-utilisation, avec un boîtier (5) présentant un canal d'aspiration interne (4) pour le guidage du courant d'air d'aspiration et une région de préhension (6) prévue sur le côté extérieur du boîtier (5), le canal d'aspiration (4) débouchant à son extrémité extérieure (7) dans une ouverture d'aspiration (8), **caractérisé en ce que**
sur le côté extérieur du boîtier (5), entre l'ouverture d'aspiration (8) et la région de préhension (6), une butée (9) faisant saillie au-delà de la région de préhension (6) est prévue pour coopérer avec le bord extérieur (10) du carquois (3),
dans lequel une section de préhension (13) ayant deux extrémités de connexion extérieures (11) et une région de la section de préhension (12) prévue entre les extrémités de connexion (11) est prévue, dans lequel au moins un diamètre extérieur d'une extrémité de connexion (11) est plus grand que le diamètre extérieur de la région de la section de préhension (12), dans lequel la butée (9) est formée comme une projection circonférentielle.

2. Accessoire de nettoyage par aspiration selon la revendication 1, **caractérisé en ce que** la butée (9) est formée comme une projection circonférentielle, annulaire et circulaire.

3. Accessoire de nettoyage par aspiration selon la revendication 1 ou 2, **caractérisé en ce que** la butée (9) est disposée à l'extrémité de connexion (11) tournée vers l'ouverture d'aspiration (8), en particulier la butée (9) dépassant de l'extrémité de connexion (11) vers l'extérieur.

4. Accessoire de nettoyage par aspiration selon l'une quelconque des revendications précédentes, **caractérisé en ce que** la région de la section de préhension (12) présente extérieurement une nervure et/ou une surface structurée.

5. Accessoire de nettoyage par aspiration selon l'une quelconque des revendications précédentes, **caractérisé en ce que** l'accessoire de nettoyage par aspiration (1) est construit en au moins trois parties.

6. Accessoire de nettoyage par aspiration selon l'une quelconque des revendications précédentes, **caractérisé en ce que** le boîtier (5) présente un embout de boîtier (14) qui peut être reliée de manière amovible à la section de préhension (13), en particulier le boîtier (9) présentant en outre une pièce d'extrémité (15) qui peut être reliée de manière amovible au embout de boîtier (14) et/ou l'embout de boîtier (14) étant reliée à la section de préhension (13) et/ou la pièce d'extrémité (15) étant reliée au embout de boîtier (14) par concordance de forme, par force et/ou par friction.

7. Accessoire de nettoyage par aspiration selon l'une quelconque des revendications précédentes, **caractérisé en ce que** la section de préhension (13) et/ou la région de la section de préhension (12) présente une symétrie de rotation et/ou une symétrie spéculaire par rapport à un axe longitudinal central.

8. Accessoire de nettoyage par aspiration selon la revendication 6, **caractérisé en ce que** la section de préhension (13) peut être insérée avec une zone de raccordement (16) dans l'embout de boîtier (14) et/ou que l'embout de boîtier (14) peut être insérée avec une zone de raccordement (24) dans la pièce d'extrémité (15).

9. Accessoire de nettoyage par aspiration selon l'une quelconque des revendications 6 et 8, **caractérisé en ce que** la butée (14) dépassant de la région de préhension (6) se raccorde directement au embout de boîtier (14), en particulier la butée (9) dépassant de l'embout de boîtier (14).

10. Accessoire de nettoyage par aspiration selon l'une quelconque des revendications 6, 8 et 9, **caractérisé en ce que** la pièce d'extrémité (15) présente une pente (17) à l'extrémité d'aspiration formant l'ouverture d'aspiration (8), et/ou **en ce que** la pièce d'extrémité (15) présente à l'extérieur un marquage (18) s'étendant en particulier parallèlement à la pente (17) comme indicateur d'usure, le marquage (18) étant en particulier disposé de telle sorte que, lorsque la pièce d'extrémité (15) insérée est reliée au embout de boîtier (14), il se trouve à distance du bord extérieur (19) de l'embout de boîtier (14) tourné vers l'ouverture d'aspiration (8).

11. Accessoire de nettoyage par aspiration selon l'une quelconque des revendications 6, 8, 9 et 10, **caractérisé en ce que** le matériau du boîtier (5), de la pièce d'extrémité (15), de l'embout de boîtier (14) et/ou de la section de préhension (13) comprend et/ou consiste en une matière plastique, de préférence thermoplastique, de préférence du polyéthylène (PE), du polypropylène (PP), du chlorure de polyvinyle (PVC) et/ou du polystyrène (PS).

12. Accessoire de nettoyage par aspiration selon l'une quelconque des revendications précédentes, **caractérisé en ce que** la surface de la section transversale du canal d'aspiration (4) est comprise entre 100 mm² et 1000 mm², de préférence entre 200 mm² et 800 mm², plus préférablement entre 300 mm² et 600 mm² et en particulier au moins sensiblement entre 400 mm² et 500 mm².

13. Appareil de nettoyage (2) destiné à être utilisé pour le nettoyage de l'intérieur de véhicules automobiles, comportant un accessoire de nettoyage par aspiration (1) avec un boîtier (5) présentant un canal d'aspiration interne (4) pour le guidage du courant d'air d'aspiration et une région de préhension (6) prévue sur le côté extérieur du boîtier (5), le canal d'aspiration (4) débouchant à son extrémité extérieure (7) dans une ouverture d'aspiration (8),
dans lequel une butée (9) sous la forme d'une marche ou d'une butée (9) faisant saillie au-delà de la région de préhension (6) est prévue sur le côté extérieur du boîtier (5) entre l'ouverture d'aspiration (8) et la région de préhension (6) pour coopérer avec le bord extérieur (10) du carquois (3),
dans lequel une section de préhension (13) ayant deux extrémités de connexion extérieures (11) et une région de la section de préhension (12) prévue entre les extrémités de connexion (11) est prévue, dans lequel au moins un diamètre extérieur d'une extrémité de connexion (11) est plus grand que le diamètre extérieur de la région de la section de préhension (12),
avec un carquois (3) pour maintenir l'accessoire de nettoyage par aspiration (1) dans l'état de non-utilisation et avec un dispositif de soufflage (20) pour générer une dépression, le dispositif de soufflage (20) étant associé au canal d'aspiration (4) par l'intermédiaire d'un tuyau (2),
dans lequel le carquois (3) est formé en particulier sous la forme d'un cylindre creux et est fermé à l'extrémité, dans lequel la butée (9) de l'accessoire de nettoyage par aspiration (1) coopère avec le bord extérieur (10) du carquois (3) de telle sorte qu'il en résulte une fermeture au moins sensiblement étanche à la pression.

14. Appareil de nettoyage selon la revendication 13, **caractérisé en ce que** la butée (9) repose à fleur sur le bord extérieur (10) du carquois (3).

15. Appareil de nettoyage selon l'une quelconque des revendications 13 à 14, **caractérisé en ce que** le dispositif de soufflage (20) comprend un dispositif de commande (22) qui réduit l'énergie fournie au dispositif de soufflage (20) pour générer la pression négative pendant l'état de l'accessoire de nettoyage par aspiration (1) inséré dans le carquois (3).
